# EUROPEAN PATENT APPLICATION

(11) **EP 3 133 710 A1**
(43) Date of publication of application: **22.02.2017**
(21) Application number: 15181979.4
(22) Date of filing: 21.08.2015
(51) Int. Cl.: H02J 3/18, H02M 7/483

(54) **ADAPTABLE MODULAR MULTILEVEL CONVERTER**

(71) Applicant: ABB Technology AG, 8050 Zürich (CH)
(72) Inventor: Wider, Bjoern, 8048 Zürich (CH); Hasler, Jean-Philippe, 72244 Västeras (SE)
(74) Representative: ABB Patent Attorneys

(57) **Abstract**

The present invention is concerned with a Modular Multilevel power Converter (MMC) Statcom with an extended preferred application range or power rating. An autotransformer is employed to transform or adapt a system voltage to an optimum design point of MMC and to decouple power and voltage rating of the MMC. Accordingly, an MMC converter optimized, by way of a number and design of the individual converter cells, for a given voltage and a preferred power rating and/or current level may likewise be operated with an optimal MMC cell current utilization in a further application range or power rating.

## Description

### FIELD OF THE INVENTION

The invention relates to a Modular Multilevel Converter (MMC) Statcom for static power-factor correction with an extended economic operation range even in the absence of a grid-connecting transformer.

### BACKGROUND OF THE INVENTION

A Modular Multilevel power Converter (MMC), also known as Chain-Link Converter (CLC), comprises a plurality of converter cells, or converter sub-modules, serially connected in converter branches, or phase legs, that in turn may be arranged in a wye/star, delta, and/or indirect converter topology. Each converter cell comprises, in the form of a half-bridge or full-bridge circuit, a capacitor for storing energy and power semiconductor switches such as insulated gate bipolar transistor (IGBT) devices, gate-turn-off thyristor (GTO) devices, integrated gate commutated thyristor (IGCT) devices, or MOSFETs for connecting the capacitor to the converter branch with one or two polarities. The voltage per converter cell capacitor may be between 1 kV and 6 kV; whereas the voltage of a converter branch may be in a range from 10 kV to several 100 kV. An MMC controller with a processor and corresponding software, or a field programmable gate array (FPGA), is responsible for controlling the converter cells and operating the power semiconductor switches by means of a pulse width modulation scheme.

MMCs may be used in electric power transmission systems as ac-only Static VAR Compensators (Statcoms) and/or Flexible AC Transmission Systems (FACTS) devices for static power-factor correction as well as for voltage quality and stability purposes. A Statcom provides reactive power support to an electric power transmission network or grid to which the Statcom is connected, by producing or absorbing reactive power.

In medium/high voltage MMC Statcom applications without a main transformer a large number of converter cells in series in each phase may be needed to meet the AC voltage rating of the system. Ideally a ratio of the power rating of an individual cell module to the power rating of the system is comparable to a ratio of the cell module and AC system voltages, with the MMC being utilized over the full power range. For a given AC system voltage and a given cell module size, there is a single preferred nominal power range per MMC configuration or topology (wye/star, delta, and/or indirect converter topology), wherein these preferred nominal power ranges may differ by up to a factor of two from one MMC configuration to the other. For any intermediate power rating and/or current demand from the cells that does not match such a preferred rating, the given cell module size and corresponding power semiconductor components are likely to qualify as overrated or over dimensioned.

An autotransformer has a single winding with two end terminals, and one or more intermediate terminals at intermediate tap points, or it is a transformer in which the primary and secondary coils have part or all of their turns in common. The primary voltage is applied across two primary terminals of the autotransformer, and the secondary voltage is taken from two secondary terminals of the autotransformer, with almost always one primary terminal and one secondary terminal in common, or shared.

The patent US 8314602 B2 discloses a converter cell module for a voltage source converter system, which converter cell module comprises at least two switching elements, means for energy storage, and an autotransformer connected to the terminal of the cell module. The autotransformer bypasses said converter cell module in the case of failure occurring in the converter cell module.

The patent application WO 2011060812 A1 discloses a Direct Current voltage source converter for high voltage direct current (HVDC) power transmission with chain-link converter branches connected between DC terminals by means of an autotransformer.

### DESCRIPTION OF THE INVENTION

It is therefore an objective of the invention to design a Modular Multilevel Converter (MMC) Statcom with an extended preferred application range or power rating. This objective is achieved by an MMC according to the independent claim. Preferred embodiments are evident from the dependent patent claims.

According to the invention, an autotransformer is employed to transform or adapt a system voltage to an optimum design point of a chain linked multi-level converter and to decouple power and voltage rating of the MMC. Accordingly, an MMC converter optimized, by way of a number and design of the individual converter cells, for a given voltage and a preferred power rating and/or current level may likewise be operated with an optimal MMC cell current utilization in a further application range or power rating.

In particular, a Modular Multilevel Converter MMC connected to a main AC power grid for static power-factor correction or Statcom applications has a first plurality of converter cells each including a cell capacitor and power semiconductor switches, the first plurality of converter cells being arranged between two branch terminals of a first converter branch. The two branch terminals are connected to a first and a second terminal of a first autotransformer, wherein a third autotransformer terminal of the first autotransformer is connected to a third phase conductor of the main AC grid. The MMC is preferably connected to the AC grid without any main transformer for transforming a grid voltage to an autotransformer voltage.

In an advantageous variant of the invention, the first converter branch of the MMC and the connection of the third autotransformer terminal to the third phase conductor of the main AC grid are devoid of a branch reactor or other dedicated additional inductance to control the valve current and improve the current and voltage waveforms in the first converter branch. In other words, the tasks conventionally assigned to the branch reactor are catered for exclusively by an inductance of the first autotransformer.

In preferred embodiments of the invention, the MMC Statcom has three converter branches and three autotransformers each connected to branch terminals of a respective converter branch, wherein the autotransformers have only three terminals each. The three autotransformers and/or the three converter branches may be arranged in a delta configuration with a first end terminal of each autotransformer and a second end terminal of each autotransformer being connected to a phase conductor of the AC main grid. The three autotransformers and/or the three converter branches may be arranged in a star configuration with a first end terminal of each autotransformer being connected to a respective phase conductor of the AC main grid and with second end terminals of the autotransformers being connected to a common star point.

The three autotransformers may include three independent single-phase autotransformers with individual, magnetically uncoupled autotransformer cores. In an alternative embodiment, the three autotransformers may be part of a three-phase autotransformer with a single transformer core comprising three magnetically connected core-legs, each of which being at least partly enclosed or surrounded by a different one of the three autotransformer windings, and jointly providing for magnetic coupling among the three autotransformers. The transformer core of the three-phase autotransformer may have one or two additional core legs devoid of any transformer windings and providing a flux return path, which may be of particular value for zero sequence flux when zero phase sequence voltage is injected into autotransformer windings, both in star and delta topology.

The invention is further claimed by a pair of MMC Statcoms comprising a first MMC Statcom and a second MMC Statcom with distinct power ratings, being adapted to be connected to the same AC voltage grid, and having autotransformers connected to converter branches of the first and second MMC Statcom. The first converter branches of the first and second Statcom include a distinct number of converter cell modules of a same size, or of a same type, while the autotransformers have distinct autotransformer settings or intermediate terminal positions in order to account for the distinct power ratings.

### BRIEF DESCRIPTION OF THE DRAWINGS

The subject matter of the invention will be explained in more detail in the following text with reference to preferred exemplary embodiments which are illustrated in the attached drawings, which schematically depict:
Fig.1 an embodiment of the invention with an MMC Statcom in delta configuration;
Fig.2 an embodiment of the invention with an MMC Statcom in star configuration.

In principle, identical parts are provided with the same reference symbols in the figures.

### DETAILED DESCRIPTION OF PREFERRED EMBODIMENTS

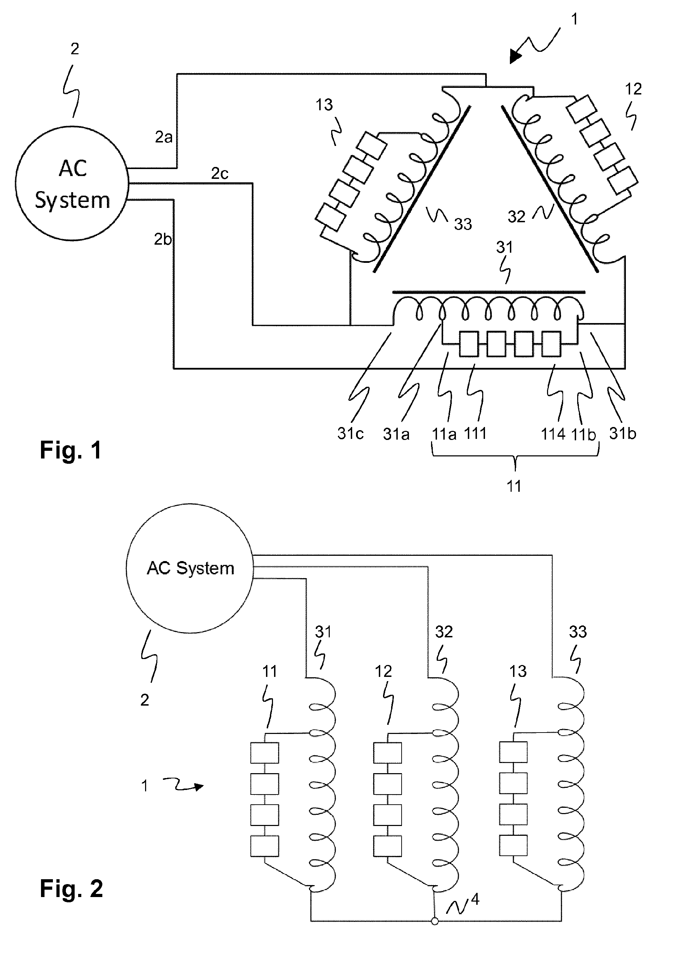

Fig.1 depicts a Modular Multilevel Converter (MMC) Statcom 1 in delta configuration connected to a three-phase AC System 2. The MMC Statcom comprises a first converter branch or phase leg 11 with four converter cells 111, 114 connected in series and delimited by two branch terminals 11a, 11b. The branch terminals are connected to a first and a second autotransformer terminal 31a, 31b of a first autotransformer 31. A third autotransformer terminal 31c is connected to a third phase conductor 2c of the AC System. One of the branch terminals 11b and the second autotransformer terminal 31b are connected to a second AC phase conductor 2b. A second and third converter branch 12, 13 are connected to terminals of a second and third autotransformer 32, 33 in analogous fashion.

In the configuration of Fig.1, the end terminals of the autotransformers 31, 32, 33 are connected in pairs and each pair is connected to one of the phase conductors 2a, 2b, 2c, resulting in a voltage reduction at the branches as compared to the voltage between the phase conductors of the AC system, for instance from 33 kV to 10 kV. Alternatively, the first branch terminal 11a may be connected to the third autotransformer (end) terminal 31c while connecting the first (intermediate) autotransformer terminal 31a to the phase conductor 2c, resulting in an up-transformation or voltage increase at the first converter branch 11. The autotransformer voltage or tap-setting ratio may preferably be between 1/3 and 3, and more preferably between 2/3 and 1.5, in which case a variability or adaptability of the intermediate autotransformer terminal does not need to cover more than one third of the autotransformer.

Each converter cell 111 may be mono or bi-directional and comprise the semiconductor switches in the form of a half-bridge or full-bridge circuit, respectively.

Fig.2 depicts a Modular Multilevel Converter (MMC) Statcom 1 in star configuration connected to the three-phase AC System 2. The MMC Statcom comprises three converter branches 11, 12, 13 each connected to a first end terminal and to an intermediate terminal of a distinct one of three autotransformers 31, 32, 33. The first end terminals are connected in a star point or neutral point 4, while second end terminals of the autotransformers are connected to phase conductors of the AC system. In this context, a step-down transformer or a grounding transformer of zig-zag type may be connected to the neutral point of the converter and configured to provide a current path for a zero sequence current.

The improved match of the MMC Statcom voltage and current rating according to the invention may replace a power transformer conventionally connecting the MMC to the AC main grid. The autotransformer solution requires less material and thus reduces cost and space requirements, and likewise reduces losses as the autotransformer has no secondary winding.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A Modular Multilevel Converter MMC for static power-factor correction connectable to a main AC grid (2), with a first plurality of converter cells each including a cell capacitor and power semiconductor switches, the first plurality of converter cells being arranged between two branch terminals (11a, 11b) of a first converter branch (11), **characterized in that** the two branch terminals are connected to a first and a second terminal (31a, 31b) of a first autotransformer (31), wherein a third autotransformer terminal (31c) of the first autotransformer is connectable to a third phase conductor (2c) of the main AC grid.

2. The MMC of claim 1, wherein the first converter branch of the MMC and a connection of the third autotransformer terminal to the third phase conductor of the main AC grid are devoid of a branch reactor.

3. The MMC of claim 1, wherein an autotransformer ratio of the first autotransformer is between 1/3 and 3, and more preferably between 2/3 and 1.5.

4. The MMC of one of claims 1 to 3, wherein the autotransformer (31) and two further autotransformers (32, 33) each connected to a respective further converter branch (12, 13) are arranged in a delta configuration.

5. The MMC of one of claims 1 to 3, wherein the autotransformer (31) and two further autotransformers (32, 33) each connected to a respective further converter branch (12, 13) are arranged in a star configuration.

6. The MMC of claim 4 or 5, wherein the three autotransformers (31, 32, 33) are part of a three-phase autotransformer, and wherein each of the three autotransformers encloses a respective transformer core leg of the three-phase autotransformer.

7. The MMC of claim 6, wherein the transformer core of the three-phase autotransformer has an additional core leg.

8. A first and second MMC according to claim 4 or 5, wherein the first and second MMC are adapted to be connected to a same AC grid, and wherein a single size or type of converter cell is used to build both the first and second MMC, **characterized in that** first converter branches of the first and second MMC include distinct numbers of converter cells, and **in that** autotransformers connected to the first converter branches have distinct autotransformer settings.
